## Europäisches Patentamt

## European Patent Office

## Office européen des brevets

(11) Publication number: **0 181 559**
**B1**

(12)

# EUROPEAN PATENT SPECIFICATION

(45) Date of publication of patent specification: **19.09.90**

(51) Int. Cl.⁵: **H 01 H 35/34**

(21) Application number: **85113743.0**

(22) Date of filing: **29.10.85**

(54) Pressure control device.

(30) Priority: **05.11.84 US 668001**

(43) Date of publication of application:
**21.05.86 Bulletin 86/21**

(45) Publication of the grant of the patent:
**19.09.90 Bulletin 90/38**

(84) Designated Contracting States:
**DE FR GB IT SE**

(56) References cited:
**DE-A-2 360 609**
**US-A-3 378 656**
**US-A-3 584 168**
**US-A-4 220 836**

(73) Proprietor: **RANCO INCORPORATED OF DELAWARE**
**555 Metro Place North Suite 550**
**Dublin Ohio 43017 (US)**

(72) Inventor: **Johnson, Carl N.**
**8407 Netherlands Place**
**Worthington Ohio 43085 (US)**
Inventor: **Phadke, Hemant**
**2036 Queensbridge Drive**
**Worthington Ohio 43085 (US)**
Inventor: **Sieling, Roger L.**
**367 Glenmont Avenue**
**Columbus Ohio 43214 (US)**

(74) Representative: **Hoffmann, Klaus, Dr. rer. nat. et al**
**Hoffmann . Eitle & Partner Patentanwälte**
**Postfach 81 04 20 Arabellastrasse 4**
**D-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to pressure responsive control devices and more particularly to pressure responsive control devices employing snap acting diaphragms calibrated to respond to predetermined sensed pressures.

Fluid pressure responsive control devices employing snap acting diaphragms for actuating a switch, or the like, are widely used for various pressure controlling functions. For example, these kinds of controls are used in refrigeration systems for governing the operation of a refrigerant compressor in response to sensed system refrigerant pressures. Devices of this sort must be small, inexpensive, accurate and highly reliable in order to find a market.

These kinds of pressure controls are often used to cycle a controlled device and thus respond to the existence of a predetermined high pressure level as well as to the existence of a predetermined lower pressure level. When controlling an air conditioner in accordance with sensed refrigerant condenser pressures, for example, the control device senses the existence of a predetermined high refrigerant pressure in the condenser and reacts to terminate operation of the refrigerant compressor. When the sensed condenser refrigerant pressure reaches a given lower level the control device reacts again to enable operation of the compressor.

A typical pressure responsive snap acting diaphragm is a thin, internally stressed sheet metal spring disc having a central, dished section. When a sufficiently large pressure differential is applied to the diaphragm in a direction tending to flatten the dished diaphragm section the dished section abruptly moves, or snaps, through the diaphragm center plane to a second position where the central portion is oppositely dished. When the pressure differential is reduced to a sufficiently low level the dished section snap moves back through the center plane to its initial position. The diaphragm motion is typically transmitted mechanically to a switch or a valve.

The high pressure level causing the diaphragm motion can be altered by changing the configuration of the dished diaphragm section. If the dished section is made deeper the pressure differential required to move the diaphragm is increased. If the dished section is flattened a relatively smaller pressure differential causes the diaphragm to respond.

The low pressure level at which the diaphragm returns to its initial position is controlled by limiting the extent of movement of the dished portion beyond the center plane. If the dished portion moves well beyond the center plane a relatively low pressure differential is required to exist before the diaphragm snaps back to its initial position. If the dished portion moves just across the center plane, it snaps back when a relatively larger pressure differential exists.

In order to assure accurate responses to specified high and low pressure levels, pressure control devices are individually calibrated during manufacture. The practice has been to assemble the control devices, subject them to operating pressures and then mechanically deform each assembly in a controlled manner until the diaphragm moves at the applied desired pressure levels.

Typical pressure control devices of the sort referred to have employed a casing defining a chamber communicating with a source of pressure to be controlled, a diaphragm hermetically closing the chamber, a switch fixed with respect to the casing and a motion transfer element between the diaphragm and the switch. The diaphragms have usually been welded about their peripheries directly to the casing or to diaphragm supporting members; but in some instances the diaphragms have simply been sealed in place to the casing with the diaphragm peripheries being unrestrained by weldments.

Some control device constructions have been proposed in which the high and low pressure events can be calibrated during manufacture by use of relatively complicated designs employing adjusting screws, biasing springs, and the like. These proposals resulted in some devices which were too expensive to achieve widespread use particularly for those applications where extremely accurate pressure sensing was not critical. Patent US—A—4,220,836 discloses an example of a control device constructed to enable high and low pressure level calibration during manufacture.

Simplified designs have also been proposed in which the control devices were built and then subjected to mechanical deformations to achieve calibration. In some proposals the diaphrams and supports were subjected to extreme overpressure from fluid introduced into the casing. The forces created by the overpressure condition yieldably deformed the diaphragms or their supports to desired configurations.

In other proposals the control devices were constructed so that the diaphragms or their supports could be yielded and bent by mechanical means in order to calibrate the control. These kinds of proposals enabled simplified control device constructions but tended to create poor production yields because the calibration processes were imprecise. In some instances the diaphragms and supports were overstressed and yielded so much that they did not respond to desired pressure levels. In many designs once overstressing occured the device could not be recalibrated. In other cases the deformation required to adjust the high pressure level resulted in changing the low pressure level to which the device responded and *vice versa*. When the control devices could not be calibrated the entire device had to be scrapped or rebuilt.

In DE—A—2 360 609 (US—A—3 816 685) there is disclosed a pressure responsive control device having a pressure housing assembly defining a pressure chamber. The pressure housing has an outwardly directed flange at what would be its open end except that it is closed at that end by one face of a snap acting disc that spans said open end and said flange. Against the other face of the snap acting disc there is positioned a deformable annular member, said annular member being equal in its outer diameter to the outer diameter defined by said flange, the arrangement thus being such that the peripheral edge of the snap acting disc is sandwiched between said flange and said annular member. A collar member of the same outer diameter as said flange is positioned against the free face of the annular member. All four of these components thus exhibit the same external overall diameter and they are secured in position, as by heliarc welding, along their common marginal periphery.

In patent specification US—A—3 378 656 there is disclosed a pressure responsive device having a pressure housing assembly defining a pressure chamber. The device comprises actuable control means fixed to said housing assembly and a snap acting pressure responsive diaphragm supported in the pressure chamber adjacent to a control plate having a supporting region supporting rigidly said diaphragm with the control plate hermetically joined together. However, in this device the control plate is separated from the diaphragm control region, both extend outwards and by screwing and unscrewing a threaded ring the peripheral portions are bent in order to adjust the tension on the diaphragm which in turn control the differential pressure of the diaphragm.

It will be appreciated that with such a construction the snap acting disc is subjected to the full heat of the welding process and it can warp. Furthermore, there is no guarantee as to calibration and the necessary calibration step must be carried out after the welding operation. The mechanical deformations of the calibrating member that are needed to accomplish this often result in the type of permanent damage already referred to in the foregoing passages and then the complete assembly including the pressure housing must be scrapped. The calibrating member has an inner annular portion joined to its outer annular portion by a land formed with a groove therein. The groove assists in restricting deformation of the calibrating member during calibration to its outer annular portion.

The present invention is defined in the accompanying Claim 1. The precharacterizing part of the claim defines those features that are already known from DE—A—2 360 609. The characterizing part of the claim defines features not known in said prior art.

In accordance with the present invention a new and improved pressure responsive control device is provided wherein a pressure responsive module is constructed, assembled and calibrated prior to its assembly to the control device thus providing an extremely simple control device construction which accurately responds to desired pressure levels and wherein low probuction yields resulting from calibration problems are substantially obviated.

An important feature of the invention resides in the construction of a pressure responsive module including a snap acting diaphragm, a diaphragm support plate to which the diaphragm is hermetically attached and a base member for connecting the support plate to the pressure device case. The diaphragm support plate includes a supporting region for rigidly maintaining the diaphragm supported along its center plane and a diaphragm control region surrounding the supporting region to which the diaphragm is hermetically joined. The support plate section between the supporting and control regions is yieldably deformed to allow for controllable positioning of the control region relative to the supporting region and enable calibration of the high pressure level to which the control device responds.

The preferred pressure device comprises a second control region surrounded by the supporting region and joined to the supporting region by a yieldably deformed section allowing for controlled positioning of the second control region relative to the supporting region to determine the low pressure level to which the diaphragm responds.

After the diaphragm support has been deformed to control the diaphragm pressure response, the module is hermetically joined to the control device case via the module base member which is so constructed and arranged that the diaphragm and the support plate are isolated from stresses created by connecting the base member to the casing.

In a preferred and illustrated embodiment of the invention the diaphragm supporting plate region is hermetically joined to the base member. The base member rigidly supports the supporting region along the diaphragm center plane. The yieldably deformable plate sections permit displacement of the control regions relative to the supporting region during calibration yet each deformable section substantially isolates the supporting region and the remote control region from deformation during calibration. This enables calibration of the high and low pressure events substantially independently of each other.

Other features and advantages of the invention will become apparent from the following detailed description of a preferred embodiment made with reference to the accompanying drawings, in which:

Figure 1 is an elevational view of a control device embodying the present invention with portions broken away and parts illustrated in cross-section; and,

Figure 2 is a view seen approximately from the plane indicated by the line 2—2 of Figure 1.

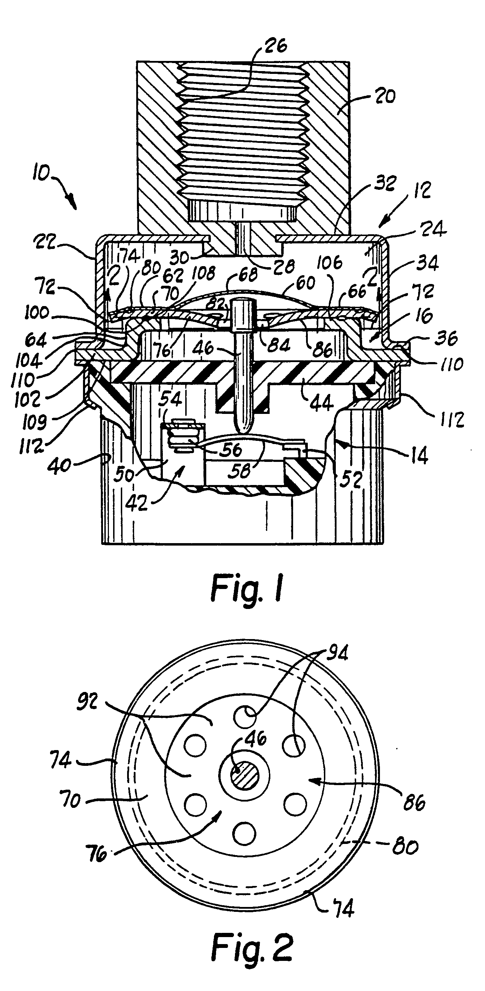

A pressure control device 10 embodying the present invention is illustrated by Figure 1 of the drawing. The illustrated pressure control device 10 is of the sort which is employed in a refrigeration system, for example, for cycling operation of an electric motor driven refrigerant compressor in response to sensed system refrigerant pressure levels in the condenser. The device 10 communicates with refrigerant in the condenser and when the refrigerant pressure reaches a predetermined relatively high level the control device 10 detects the pressure level and discontinues operation of the compressor. When the sensed refrigerant pressure level reaches a predetermined lower level the control device 10 responds to enable re-initiation of compressor operation.

The control device 10 comprises a pressure housing assembly 12 constructed to communicate with system refrigerant, a control switch assembly 14 electrically connected in a compressor motor controlling circuit, and a pressure responsive module 16 providing a pressure transducer between the housing assembly 12 and the switch assembly 14.

The housing assembly 12 comprises a suitable pressure fitting 20 hermetically attached to a cup-like casing 22 which defines an internal pressure chamber 24. The fitting 12 can be of any suitable or conventional construction and is illustrated as formed by a body having an internal threaded passage 26 terminating in a pressure transmitting port 28 extending through a projection 30 at the end of the body. A refrigerant pressure transmitting metal tube (not illustrated) is threaded into the fitting 20 and sealed in place in order to transmit refrigerant pressure from the refrigeration system to the control device.

The casing 22 is preferably formed by a drawn stainless steel cup having a base 32, a cylindrical wall 34 extending from the base and an outwardly flared mounting flange 36 at the end of the cup wall remote from the base. The base 32 defines an aperture through which the fitting projection 30 extends. The end of the projection 30 is upset and staked in place to the cup base 32. The fitting is brazed to the casing 22 about the projection 30 so that the juncture of the pressure fitting and the casing is hermetic.

The control switch assembly 14 comprises a molded plastic cup-like switch case 40 supporting a switch assembly 42 within it. A plastic cover member 44 extends across the open end of the switch case and defines a central opening through which a switch operating pin 46, formed from a dielectric material, extends. The operating pin 46 transmits switch operating motion between the pressure responsive module 16 and the switch assembly 42.

The switch assembly 42 is formed by terminal bars 50, 52 fixed in the switch case. The terminal bar 50 carries a fixed switch contact 54 while the terminal bar 52 supports a movable switch contact 56 mounted at the projecting end of an electrically conductive cantilevered resilient blade 58.

In the preferred control device the terminals 50, 52 extend through conforming openings in the closed end of the switch case 42 and are staked in place with respect to the case. The terminal bars 50, 52 project from the closed end of the case 42 (not illustrated) and are wired into a circuit for controlling energization of the refrigerant compressor. When the switch contacts are engaged, as illustrated by Figure 1, the switch assembly 42 is conductive to enable operation of the refrigerant compressor. The switch contacts are opened by deflection of the blade 58 in a direction away from the pressure responsive module 16 so that the compressor controlling circuit is interrupted.

The pressure responsive module 16 hermetically closes the chamber 24 and functions to operate the control switch assembly 42 in response to the detected refrigerant pressure in the chamber. In the illustrated and preferred embodiment the pressure responsive module comprises a diaphragm 60, a diaphragm control plate 62 hermetically connected to the diaphragm and a support member 64 for supporting the control plate and hermetically joining the control plate to the casing 22. Air at or close to atmospheric pressure is present in the switch case 40 so that the module is subjected to differential pressure forces which vary according to changes in the system refrigerant pressure.

The diaphragm 60 is a thin spring metal sheet formed to provide an initially flat annular section 66 disposed about a central dome section 68. The diaphragm is internally stressed such that when no pressure differential exists across the diaphragm the dome section 68 is biased to its position illustrated by Figure 1 of the drawings. When a pressure differential is applied across the diaphragm in a direction tending to flatten the dome section (viz. when the pressure in the chamber 24 increases above ambient atmospheric pressure) the dome section remains substantially stationary until a predetermined differential pressure level is reached at which time the dome section abruptly moves in snap fashion through the plane of the annular section 66 and assumes a second position in which the curvature of the dome section is reversed. The dome section 68 remains in its second position until the pressure differential across the diaphragm has been reduced to a predetermined lower level at which time the dome section snap moves back to its initial position.

The chamber pressure levels at which the dome section 68 moves are determined by the internal stresses in the diaphragm and these stresses are in turn governed by the configuraton of the diaphragm control plate 62. The control plate 62 comprises a supporting region 70 for engaging and supporting the diaphragm 60 along a center plane, generally indicated by the reference character 72, a first diaphragm control region 74 surrounding the supporting region 70, and a second diaphragm control region 76 surrounded by the supporting region 70. After the diaphragm is assembled to the control plate the control plate is subjected to controlled deformations to position the control regions for governing the differential pressure levels at which the diaphragm moves between its positions.

The control region 74 is formed by an annular outer marginal portion of the control plate and is hermetically welded to the diaphragm 60 continuously about its outer periphery. The control region is connected to the supporting region 70 by a deformable weakened plate section 80 to enable controlled movement of the control region 74 relative to the supporting region 70 during calibration without any material deformation or change of position of the supporting region or the control region 76 occurring. In the preferred embodiment the weakened plate section 80 is formed by a circumferential groove, or notch, which surrounds the supporting region.

The control region 74 and the diaphragm section supported thereon project outwardly from the supporting region 70 wholly into the pressure chamber 24. This feature ensures that the high pressure chamber fluid completely surrounds the control region 74 and the diaphragm margin so that unbalanced pressure forces can not be exerted on the control region 74. There is thus no tendency for the control region to be yieldably deflected from its calibrated position by high pressure fluid in the chamber 24 during use of the control device 10.

The second diaphragm control region 76 is formed by a dome engaging face 82 surrounding a central plate opening 84. The face 82 engages the dome section 68 about the opening 84 to limit the snap motion of the diaphragm dome section from its first position and thus defines the second position of the dome section. The control region 76 is joined to the supporting region 70 by a weakened yieldably deformable plate section 86. The section 86 allows the second control region to be controllably displaced relative to the supporting region during calibration without significant deformation or change of position of the supporting region or the first control region 74.

In the preferred control device the weakened, deformable section 86 is formed by spokes 92 extending between the supporting region 70 and the face 82. The spokes 92 support the face 82 in cantilever fashion and permit controlled deformation of the section 86 for positioning the face 82. The illustrated spokes are formed by equally spaced holes extending through the plate radially inwardly of the supporting region. The spokes weaken the section 86 sufficiently to enable deformation of the face relative to the supporting region during calibration of the device but are sufficiently strong to resist deformation as a result of operating pressure forces experienced during use of the control device.

If increased deformability of the weakened section 86 is desired a shallow circumferential groove or notch can be formed in the control plate along the juncture of the supporting region 70 and the control region 76.

The weakened plate sections 80, 86 are illustrated by Figure 1 as substantially deformed so that the respective associated control regions 74, 76 are moved well away from the plane 72. The degree of deformation is somewhat exaggerated for purposes of illustration.

The supporting region 70 rigidly supports a major portion of the diaphragm section 66 in full face contact along the center plane 72. The pressure differential between the chamber 24 and the atmosphere ambient the control maintains the diaphragm engaged across the face of the supporting region 70 during normal operation of the control device so that the diaphragm position remains stabilized.

The base member 64 is preferably formed by a sheet metal cup-like body hermetically joined to the control plate 62 and constructed and arranged for hermetic attachment to the casing 22 when the control device 10 is assembled. The base member 64 comprises a first body portion 100 hermetically attached to and rigidly supporting the plate region 70, a second body portion 102 constructed for attachment to the casing 22 and an imperforate generally cylindrical wall 104 interconnecting the portions 100, 102.

The body portion 100 is preferably formed by an annular flange projecting radially inwardly from the body wall 104. The flange defines a face 106 confronting the supporting region 70 for engaging and supporting the region 70. In the preferred embodiment the face 106 corresponds in size and shape to the supporting region 70 so that the supporting region 70 is fully supported by the face 106. The face 106 and the supporting region 70 are joined by a hermetic weld which extends continuously circumferentially about the center of the region 70. The weld joint 108 is preferably formed by a resistance weld, but could be formed by other suitable welding techniques.

The body portion 102 defines a mounting flange projecting radially outwardly from the wall 104 to provide a flat rigid locating face 109 for the switch assembly and an outer peripheral margin 110 confronting and engaging the casing flange 36. The flange 36 and marginal portion 110 of the body 102 are hermetically joined by a continuous circumferential weld which is preferably a plasma weld. The weld joint between the flange 36 and the marginal portion 110 must provide a high degree of burst strength because it is subjected to refrigerant pressure in the chamber 24. Accordingly, a relatively large, high strength weld joint must be formed between these parts.

In the illustrated embodiment a switch mounting ring 112 is welded to the flange margin 110 and clinched to the switch casing to complete the control device assembly. The juncture between the switch assembly and the module 16 is not hermetically sealed and accordingly the interior of the control device 10, except for the chamber 24, is initially exposed to ambient atmospheric pressure. The preferred control devices are frequently potted, i.e., the switch casing and related parts are covered by a suitable compound which serves to seal the interior of the control from the surroundings. The atmospheric air in the device is trapped by the potting material and thus the interior of the control switch casing remains at or about atmospheric pressure under most conditions of use of the device.

An important aspect of the invention resides in the construction of the module 16 which enables the module to be calibrated prior to its assembly to the casing 22. The module 16 is initially fabricated by welding the diaphragm to the control plate and welding the control plate to the support body. The supporting region 70 and the control region 74 are preferably flat and coplanar at this juncture while the control region 76 is initially deformed out of the plane of the supporting region 70 in the direction away from the diaphragm.

The assembled module is then placed in a calibration pressure chamber with the body flange 102 sealing the chamber from ambient atmospheric pressure to enable controlled pressure differentials to be established across the diaphragm. The chamber pressure is raised to a high pressure level at which the diaphragm snap moves into engagement with the face 82. This pressure level is compared to the desired calibration pressure level at which the switch contacts should be opened and the chamber pressure is relieved.

A forming die is urged into contact with the diaphragm and the control region 74 to yield and deform the weakened control plate section 80 and reposition the control region 74 relative to the supporting region 70. The control plate is slowly yieldably deformed so that the control region 74 assumes a slightly conical configuration. This, in turn, alters the diaphragm stresses to reduce the internal spring biasing forces tending to resist diaphragm motion. The calibration chamber is pressurized again to determine the new pressure level at which the diaphragm snap moves against the face 82. If the diaphragm moves at a pressure level above the desired calibration pressure level the deformation step is repeated to further deform the control region 74. This process is repeated until the device responds at the desired calibration pressure level.

In order to calibrate the low pressure operating level, the calibration chamber pressure is reduced until the diaphragm snap moves away from the face 82. This level is compared to the desired calibration pressure level at which the diaphragm should move away from the face 82. If the pressure level is too low, as it should be, a second forming die is moved into engagement with the control region 76 to yieldably deform the plate section 86 in the direction of the diaphragm.

The chamber pressure is next increased to reengage the diaphragm with the face 82 and reduced until the diaphragm snap moves away from the face 82 again. The pressurization-deformation steps are repeated as necessary until the control region 76 has been moved relative to the supporting region to the extent that the dome section snaps away from the face 82 at the desired low calibration pressure level.

The chamber pressure is next cycled between the high and low calibration pressure levels to check the calibration. If the diaphragm fails to respond at a desired calibration pressure level the diaphragm control plate can be "bumped" again by either or both of the forming dies to reposition the control regions so that the diaphragm responds to the calibration pressure levels.

If the low pressure level at which the diaphragm responds is higher than the desired pressure level, the module 16 can be subjected to a sufficient over-pressure in the calibration chamber to force the diaphragm into engagement with the control region 76 and deform the control region away from the center plane 72. This deformation reduces the low pressure level to which the diaphragm responds.

The weakened diaphragm control plate sections serve to isolate the supporting region 70 from deformation of the control regions 74, 76. This is particularly important because deforming either control region could otherwise be accompanied by twisting or dishing of both the supporting region and the other control region.

After calibration is completed the module 16 is removed from the calibration chamber and retained in inventory until required for production. At that time the fully assembled, calibrated pressure responsive module 16 is welded to the casing flange 36 by a circumferential, hermetic weld joint.

Because the weld joint must be quite strong, the weld is relatively large and a significant amount of heat is required to produce it. It is necessary to shield the diaphragm and the support plate from excessive heating after calibration while welding the module to the pressure casing flange because differential expansion and contraction of the diaphragm and support plate can adversely affect the calibration. Accordingly the support member 64 is constructed from a relatively light gage stainless steel stamping which has a relatively low coefficient of conductive heat transfer and thus strongly resists heat conduction from the welding area to the diaphragm plate. Further, the support member mounting flange and the cylindrical wall 104 serve to provide a relatively long heat flow path between the weld joint and the diaphragm support which further inhibits heating of the diaphragm and the support plate.

While a preferred embodiment of the invention has been illustrated and described in detail, the present invention is not to be considered limited to the precise construction disclosed. For example, although a single diaphragm disc is disclosed the diaphragm could be constructed using multiple nested snap discs. Various adaptations, modifications and uses of the invention may occur to those skilled in the art to which the invention relates and the intention is to cover all such adaptions, modifications and uses falling within the scope of the appended claims.

## Claims

1. A pressure responsive control device (10) comprising:

a pressure housing assembly (12) defining a pressure chamber (24);

actuable control means (14) fixed to said housing assembly (12);

a snap acting pressure responsive diaphragm (60) supported in the pressure chamber adjacent a control plate (62) having a supporting region (70) rigidly supporting said diaphragm (60) with the control plate and diaphragm hermetically joined together and the diaphragm positioned to actuate the control means; characterized in that:

the diaphragm (60) and the control plate (62) are part of a pre-formed module comprising a supporting base member (64), only the supporting base member (64) of said module being in contact with the pressure housing assembly (12), the supporting base member (64) being integral with the control plate (62) at said supporting region (70) and being hermetically joined to said pressure housing assembly (12) remote from said supporting region (70) and said control plate further comprising a diaphragm control region (74) extending about the supporting region (70) and projecting outwardly from the juncture of the supporting region (70) and the base member (64), said diaphragm control region (74) being yieldable and deformable relative to said supporting region (70) to engage and position said diaphragm to control the high pressure level at which the diaphragm moves to actuate the control means (14) and a second control region (76) surrounded by the supporting region (70) and projecting inwardly from the juncture of the supporting region and the base member, said second control region including a weakened deformable section (86) deformable to enable positioning of said second control region relative to said supporting region to control the extent of motion of the diaphragm.

2. A control device as claimed in claim 1 further characterized in that said deformable weakened section (86) is positioned between said second control region (76) and said supporting region (70).

3. A control device as claimed in Claim 1 further characterized in that said control region (74) and the diaphragm portion (66) supported thereby extend into said pressure chamber (24) to preclude the application of differential pressure forces thereon during operation of the control.

4. A control device as claimed in Claim 1 further characterized in that said base member (64) defines a casing engaging face (110) remote from said supporting region (70), said casing engaging face (110) hermetically joined to said casing (22).

5. A control device as claimed in Claim 1 or 2 further characterized in that a weakened yieldably deformable plate section (80) is located between said supporting region (70) and said first control region (74), said weakened section (80) being yieldably deformable to enable yielding shifting motion to said first control region (74) while said supporting region (70) remains rigidly supported by said body member (100) and isolated from the shifting of said control region.

6. A control device as claimed in Claim 1 further characterized in that said supporting region (70) defines a planar annulus having a first surface for supporting an annular section of said diaphragm (60) and a second surface in face contact with a base member support face (106), said base member support face and said second supporting region surface joined by a circumferentially continuous hermetic weld.

7. A control device as claimed in Claim 6 wherein said base member (64) is constructed from relatively light gauge sheet metal material having a relatively low coefficient of conductive heat transfer and is constructed to define a casing mounting structure (102, 104) remote from the base member support face (106), said remote mounting structure adapted for welding to the casing (22).

8. A method of making the control device claimed in Claim 1 including the steps of:

rigidly supporting said module in a predetermined position and yieldably deforming said control plate to establish a differential pressure level at which said diaphragm is actuated; and,

thereafter hermetically joining said module to said casing.

9. A control device comprising a pressure housing assembly and actuable control means secured to the housing assembly, and a pressure responsive module according to any one of Claims 1 to 7.

**Patentansprüche**

1. Druckempfindliche Regelvorrichtung (10), die folgende Einrichtungen aufweist:

eine Druckgehäuseeinheit (12), die eine Druckkammer (24) umschließt,

eine an der Druckgehäuseeinheit (12) befestigte betätigbare Regelschalteinrichtung (14),

eine druckempfindliche Membran (60) mit Springschaltfunktion, die in der Druckkammer nahe einer Betätigungsplatte (62) mit einem Auflagebereich (70) angeordnet ist, der die Membran (60) starr abstützt, wobei die Betätigungsplatte und die Membran hermetisch miteinander verbunden sind und die Membran so angeordnet ist, daß sie die Schalteinrichtung betätigt; dadurch gekennzeichnet, daß:

die Membran (60) und die Betätigungsplatte (62) Teil einer vorgeformten Baugruppe sind, die ein Tragsockelelement (64) aufweist, wobei das Tragsockelelement (64) der Baugruppe als einziges Teil mit der Druchgehäuseeinheit (12) in Berührung steht und integral mit der Betätigungsplatte (62) an dem Auflagebereich (70) ausgebildet und hermetisch mit der weiter vom Auflagebereich (70) entfernt liegenden Druckgehäuseeinheit (12) verbunden ist, wobei die Betätigungsplatte außerdem einen Membranregelbereich (74) aufweist, der sich über den Auflagebereich (70) erstreckt und über die Verbindung zwischen dem Auflagebereich (70) mit dem Tragsockelelement (64) nach außen vorsteht, während der Membranregelbereich (74) gegenüber dem Auflagebereich so elastisch und verformbar ist, daß die Membran zur Regelung des hohen Druckpegels, bei dem sie durch Bewegung die Regelschalteinrichtung (14) und einen vom ersten Auflagebereich (70) umschlossenen, von der Verbindung des Auflagebereichs mit dem Sockelelement nach innen vorspringenden zweiten Betätigungsbereich (76) betätigt, in Eingriff bringbar und positionierbar ist, und daß der zweite Betätigungsbereich einen abgeschwächten verformbaren Abschnitt (86) aufweist, der so verformbar ist, daß der zweite Betätigungsbereich gegenüber dem Auflagebereich so positionierbar ist, daß sich der Umfang der Membranbewegung beeinflussen läßt.

2. Regelvorrichtung nach Anspruch 1, dadurch gekennzeichnet, daß der verformbare abgeschwächte Abschnitt (86) zwischen dem zweiten Betätigungsbereich (76) und dem Auflagebereich (70) liegt.

3. Regelvorrichtung nach Anspruch 1, dadurch gekennzeichnet, daß der Membranregelbereich (74) und der darauf abgestützte Membranabschnitt (66) sich so in die Druckkammer (24) erstrecken, daß deren Beaufschlagung mit Differentialdrückkräften während des Regelbetriebs ausgeschlossen ist.

4. Regelvorrichtung nach Anspruch 1, dadurch gekennzeichnet, daß das Tragsockelelement (64) eine vom Auflagebereich (70) weiter entfernt liegende Gehäuseeingriffsfläche (110) begrenzt, die hermetisch an das Gehäuse (22) angeschlossen ist.

5. Regelvorrichtung nach Anspruch 1 oder 2, dadurch gekennzeichnet, daß zwischen dem Auflagebereich (70) und dem ersten Membranregelbereich (74) ein geschwächter elastisch verformbarer Plattenabschnitt (80) angeordnet ist, der elastisch so verformbar ist, daß er eine elastische Verschiebebewegung des ersten Membranregelbereichs (74) ermöglicht, während der Auflagebereich (70) weiterin starr auf dem Hauptteil (100) abgestützt bleibt und gegenüber der Verschiebebewegung des Regelbereichs isoliert ist.

6. Regelvorrichtung nach Anspruch 1, dadurch gekennzeichnet, daß der Auflagebereich (70) einen planaren Ringraum begrenzt, dessen erste Fläche einen ringförmigen Abschnitt der Membran (60) abstützt und dessen zweite Fläche in Flächenberührung mit einer Abstütztfläche (106) des Tragsockelelements steht, wobei die Abstützfläche (106) des Tragsockelelements und die zweite Fläche des Auflagebereichs durch eine über den Umfang ununterbrochen verlaufende hermetische Schweißnaht miteinander verbunden sind.

7. Regelvorrichtung nach Anspruch 6, bei welcher das Tragsockelelement (64) aus einem relativ dünnen Blechmaterial mit vergleichsweise niedrigem galvanischen Wärmeleitkoeffizienten hergestellt und so aufgebaut ist, daß darin eine von der Abstützfläche (106) des Tragsockelelements entfernt liegende Gehäusebefestigungskonstruktion (102, 104) ausgebildet ist, welche sich zur Schweißverbindung mit dem Gehäuse (22) eignet.

8. Verfahren zur Herstellung der Regelvorrichtung nach Anspruch 1, das die folgenden Verfahrensschritte aufweist:

starres Abstützen der Baugruppe in vorgegebener Stellung und elastisches Verformen der Betätigungsplatte zum Aufbau eines Differentialdruckniveaus, bei dem die Membran betätigbar ist; und

anschließendes hermetisches Verbinden der Baugruppe mit dem Gehäuse.

9. Regelvorrichtung mit einer Druckgehäuseeinheit und einer an der Gehäuseeinheit befestigten betätigbaren Regelschalteinrichtung, sowie mit einer auf Druck ansprechenden Baugruppe nach einem der Ansprüche 1 bis 7.

**Revendications**

1. Dispositif (10) de contrôle sensible à une pression comprenant:

une ensemble (12) à corps résistant à la pression définissant une chambre de pression (24),

un moyen (14) de contrôle manoeuvrable fixé à l'ensemble (12) à corps;

une membrane (60) sensible à la pression agissant par déclic supporté dans la chambre de pression au voisinage d'une plaque de contrôle (62) ayant une région porteuse (70) soutenant rigidement cette membrane (60) avec la plaque de contrôle et la membrane réunies hermétiquement l'une à l'autre et la membrane disposée pour manoeuvrer le moyen de contrôle, caractérisé en ce que:

la membrane (60) et la plaque de contrôle (62) sont une partie d'un module préformé comprenant un élément de base porteur (64), seul cet élément de base porteur (64) du module étant en contact avec l'ensemble (12) à corps supportant la pression, l'élément de base porteur (64) constituant une pièce avec la plaque de contrôle (62) à ladite région porteuse (70) et étant réunie hermétiquement à l'ensemble (12) à corps résistant à la pression loin de la région porteuse (70) et la plaque de contrôle comprenant en plus une région (74) de contrôle de membrane s'étendant autour de la région porteuse (70) et se projetant vers l'extérieur à partir de la jonction de la région porteuse (70) et de l'élément de base (64), cette région (74) de contrôle de membrane étant fléchissante et déformable par rapport à la région porteuse (70) pour s'engager avec la membrane et la tenir en position afin de contrôler la valeur élevée de la pression à laquelle la membrane se déplace pour manoeuvrer le moyen de contrôle (14) et une seconde région de contrôle (76) entourée par la région porteuse (70) et se projetant vers l'intérieur à partir de la jonction de la région porteuse et de l'élément de base, cette seconde région de contrôle comprenant une partie déformable affaible (86) déformable pour permettre le positionnement de la seconde région de contrôle par rapport à la région porteuse pour contrôler l'importance du mouvement de la membrane.

2. Dispositif de contrôle selon la revendication 1, caractérisé en outre en ce que la partie déformable affaible (86) est située entre la seconde région de contrôle (76) et la région porteuse (70).

3. Dispositif de contrôle selon la revendication 1, caractérisé en outre en ce que la région de contrôle (74) et la partie (66) de la membrane supportée par cette région, s'étendant à l'intérieur de la chambre de pression (24) pour empêcher l'application de forces différentielles de pression sur elles pendant le fonctionnement du dispositif de contrôle.

4. Dispositif de contrôle selon la revendication 1, caractérisé en outre en ce que l'élément de base (64) définit une face (110) d'engagement avec une enveloppe, éloignée de la région porteuse (70), cette face (110) d'engagement avec une enveloppe étant réunie hermétiquement à ladite enveloppe (22).

5. Dispositif de contrôle selon la revendication 1 ou 2, caractérisé en outre en ce qu'une partie affaiblie (80) déformable par fléchissement est située entre la région porteuse (70) et la première région de contrôle 74, cette partie affaiblie (80) étant déformable par fléchissement pour permettre à cette première région de contrôle (74) un mouvement de déplacement par fléchissement pendant que ladite région porteuse (70) reste soutenue rigidement par l'élément de corps (100) et isolée du déplacement de ladite région de contrôle.

6. Dispositif de contrôle selon la revendication 1, caractérisé en outre en ce que la région porteuse (70) définit un anneau plan ayant une première surface pour porter une partie annulaire de la membrane (60) et une seconde surface en contact de surface avec une face porteuse (106) de l'élément de base, cette face porteuse de l'élément de base et cette seconde surface de la région porteuse étant réunies par une soudure hermétique circonférentielle continue.

7. Dispositif de contrôle selon la revendication 6, dans lequel l'élément de base (64) est fabriqué à partir d'une matière en feuille métallique relativement légère ayant un coefficient relativement bas de conductibilité calorifique et il est réalisé pour définir une structure (102, 104) de montage d'enveloppe éloigné de la face porteuse (106) de l'élément de base, cette structure de montage éloignée étant adaptée pour être soudée à l'enveloppe (22).

8. Procédé de fabrication du dispositif de contrôle revendiqué à la revendication 1, comprenant les opérations de:

supporter rigidement le module à une position prédéterminée et déformer par fléchissement la plaque de contrôle pour établir une valeur différentielle de la pression à laquelle la membrane est manoeuvrée, et

réunir ensuite hermétiquement le module et l'enveloppe.

9. Dispositif de contrôle comprenant un ensemble à corps résistant à la pression et un moyen de contrôle manoeuvrable réuni à cet ensemble à corps, et un module sensible à la pression selon l'une quelconque des revendications 1 à 7.

Fig. I

Fig. 2

1